**Europäisches Patentamt**

**European Patent Office**

**Office européen des brevets**

(19)

(11) Veröffentlichungsnummer : **0 298 472 B1**

# EUROPÄISCHE PATENTSCHRIFT

(12)

(45) Veröffentlichungstag der Patentschrift :
25.09.91 Patentblatt 91/39

(51) Int. Cl.$^5$ : **A62D 3/00, C01B 7/01**

(21) Anmeldenummer : **88110855.9**

(22) Anmeldetag : **07.07.88**

(54) Verfahren zur Aufbereitung von Chlorierungsrückständen.

(30) Priorität : **09.07.87 DE 3722727**

(43) Veröffentlichungstag der Anmeldung :
**11.01.89 Patentblatt 89/02**

(45) Bekanntmachung des Hinweises auf die
Patenterteilung :
**25.09.91 Patentblatt 91/39**

(84) Benannte Vertragsstaaten :
**BE DE FR GB IT NL**

(56) Entgegenhaltungen :
**EP-A- 0 103 819**
**DE-A- 2 827 761**
**DE-B- 2 540 178**

(73) Patentinhaber : **WACKER-CHEMIE GMBH**
**Prinzregentenstrasse 22**
**W-8000 München 22 (DE)**

(72) Erfinder : **Gabler, Wolfdietrich, Dr.**
**Marienbergerstrasse 48**
**W-8263 Burghausen (DE)**
Erfinder : **Weiss, Gotthold, Dipl.-Ing. (FH)**
**Marie-Ebert-Strasse 9**
**W-8263 Burghausen (DE)**
Erfinder : **Hartl, Johann**
**Wechselpergerstrasse 5**
**W-8263 Burghausen (DE)**

## Beschreibung

Die Erfindung betrifft ein Verfahren zur Aufbereitung von Chlorierungsrückständen.

Bei der Herstellung von Perchlorethylen und/oder Tetrachlorkohlenstoff durch Hochtemperaturchlorierung gesättigter wie ungesättigter Kohlenwasserstoffe bzw. teilchlorierter Kohlenwasserstoffe mit 1 bis 4 Kohlenstoffatomen entstehen perchlorierte Kohlenwasserstoffe als Nebenprodukte, deren wirtschaftliche Verwertung wegen stark begrenzter Einsatzmöglichkeiten sowie erschwerter technischer Handhabung äußerst problematisch ist. Diese perchlorierten Kohlenwasserstoffnebenprodukte sind vorwiegend Gemische aus Hexachlorethan, Hexachlorbutadien und Hexachlorbenzol. Sie fallen beim Hochtemperaturchlorierungsprozeß bei einem Anlagendruck von 1.6 bar abs. bis 2.6 bar abs. und Temperaturen von 240 bis 280°C als Schmelze an und beginnen schon bei Temperaturen unterhalb von 200 bis 230°C zu erstarren und in einen festen Zustand überzugehen. Wegen des hohen Gehaltes an Hexachlorbenzol sind diese Chlorierungsrückstände in allen bekannten technischen Lösungsmitteln sehr schwer löslich. Verfahren, diese Rückstände durch Pyrolyse, Cracken, Dechlorieren oder Verbrennen mit Sauerstoff in einer Knallgasflamme (DE-PS 1246701) in verwertbare Produkte überzuführen, sind wegen technischer Schwierigkeiten, wie erschwerte Handhabung infolge der schlechten Löslichkeit, starke Sublimationsneigung und hohe Korrosivität sowie aufgrund niedriger Ausbeuten und hoher Investitions- wie Verarbeitungskosten kaum wirtschaftlich. Daher bleibt in der Regel nur der Weg übrig, diese Chlorkohlenwasserstoffkörper meist unter hohem Kostenaufwand anderweitig zu entsorgen. Somit besteht eine wesentliche Voraussetzung für das wirtschaftliche Betreiben eines solchen Hochtemperaturchlorierungsprozeßes darin, die Chlorausbeute des Gesamtverfahrens z.B. durch Rückgewinnung von Chlor aus den Chlorierungsabfällen in Form von verwertbarem Chlorwasserstoff zu verbessern. Gleichzeitig sollte die Beseitigung dieser Heißchlorierungsrückstände in möglichst umweltfreundlicher Weise erfolgen. Hexachlorbenzol als Hauptkomponente in diesen Chlorierungsabfällen ist nämlich persistenzfähig und würde sich, an die Umwelt abgegeben, durch Bioakkumulation anreichern, so daß die Entsorgung dieser Abfälle — unabhängig von wirtschaftlichen Aspekten — unter strengster Vermeidung von Verunreinigungen der Luft, des Abwassers und des Grundwassers erfolgen muß. Häufig werden diese Rückstände deshalb in behördlich genehmigten Untertage-Deponien abgelagert. Diese Entsorgungsart ist jedoch schon deshalb unbefriedigend, weil mit diesen Rückständen, je nach Reaktionsführung beim Heißchlorierungsprozeß, 5 bis 20 Gew.% des eingesetzten Chlors verlorengehen.

Die Entsorgung dieser Rückstände durch Verbrennen bei Bedingungen, die eine PCB-bzw. Dioxinbildung ausschließen, jedoch möglichst unter Rückgewinnung des Chloranteils bereitet andererseits erhebliche technische Schwierigkeiten. Sie setzt einen gut dosierbaren und damit fließfähigen Zustand dieser Rückstände voraus. Schmelzen dieser Rückstände sind bei den erforderlichen hohen Temperaturen schwer beherrschbar und wegen gleichzeitiger Anwesenheit von Metallchloriden äußerst korrosiv. Versuchen, diese Rückstände in Lösung zu bringen, sind enge Grenzen gesetzt, da eine derartige Aufbereitung nur dann sinnvoll ist, wenn als Verbrennungsprodukt neben dem erwünschten Chlorwasserstoff nicht noch allzu große Mengen Wasser entstehen, wodurch der Chlorwasserstoff lediglich als wertlose Salzsäure anfiele. Darüberhinaus sind diese Chlorierungsabfälle zudem auch noch sehr schwer löslich.

So können gemäß DE-AS 1228232 bzw. DE-OS 2827761 nur flüssige bzw. fließfähige Chlorkohlenwasserstoffrückstände zur Verbrennung unter Rückgewinnung des Chlorgehalts als Chlorwasserstoff bzw. Salzsäure eingesetzt werden. Katalytische Oxidationen von Chlorkohlenwasserstoffrückständen unter Chlorwasserstoffgewinnung beschränken sich ebenfalls auf den Einsatz flüssiger, d.h. einfach dosierbarer Rückstände (G.G. Bond, N. Sadeghi J. appl. chem. Biotechnol. 25 (1975), 241 — 248 — "Catalyzied Destruction of Chlorinated Hydrocarbons").

Gemäß DE-OS 3236323 wurde auch vorgeschlagen, diese bei Umgebungstemperatur festen Hochtemperaturchlorierungsrückstände mit definierten flüssigen Chlor und Sauerstoff enthaltenden Kohlenwasserstoffgemischen und/oder bestimmten mineralischen Heizstoffen unter Aufrechterhaltung definierter Misch-Temperatur- und Druckbereiche vor der eigentlichen Verbrennung in Lösung zu bringen. Die Praxis hat jedoch gezeigt, daß dieses Inlösungbringen bei moderaten Temperaturen (100-180°C) weit unter dem Erstarrungspunkt der festen Heißchlorierungsrückstände mit großen Nachteilen verbunden ist, weil in einer Zeitreaktion Crackprozesse eintreten, die zu Ablagerungen in Apparaturen und Leitungen sowie zu einem nicht unerheblichen und daher gefährlichen Druckanstieg, aufgrund der Freisetzung von gasförmigem HCl in diesem Temperaturbereich, führen.

Aufgabe der Erfindung war es, ein Verfahren zur Aufbereitung von festen Chlorierungsrückständen zu finden, wobei die Chlorierungsrückstände in einen fließfähigen Zustand gebracht werden sollten, ohne daß die oben beschriebenen Nachteile wie Koagulation der Mischung bzw. Freisetzung von gasförmigem HCl als Folge von Crackprozessen auftreten. Dabei sollten jedoch Zubereitungen erhalten werden, die so verbrannt werden können, daß die Belange das Umweltschutzes gewahrt bleiben und zumindest der Hauptanteil des Chlors als trockener Chlorwasserstoff gewonnen werden kann.

Überraschenderweise ist dies dadurch gelungen, daß die Schmelze der Chlorierungsrückstände unter Kühllung zu teerartigen Chlorkohlenwasserstoffen, die als Nebenprodukte bei der Pyrolyse von 1,2-Dichlorethan zu monomerem Vinylchlorid sowie bei der Aufarbeitung der Pyrolyseprodukte bzw. von rohem 1,2-Dichlorethan aus der Direkt- und/oder Oxichlorierung von Ethylen anfallen, zugemischt wird. Es ist dabei umso überraschender, daß die erfindungsgemäß als flüssige, breiige Masse zu erhaltenden Zubereitungen ohne Ausbildung von Ablagerungsprodukten, d.h. ohne Leitungsverlegung praktisch unbegrenzt pumpbar bleiben, sofern sie ständig gerührt und gekühlt werden. Einem Fachmann wäre es geläufiger gewesen, wenn dies im umgekehrten Fall, d.h. bei Verwendung von Begleitheizsystemen der Fall gewesen wäre.

Gegenstand der Erfindung ist ein Verfahren zur Aufbereitung von Chlorierungsrückständen, dadurch gekennzeichnet, daß die in Schmelze bei Temperaturen von 240 bis 280°C anfallenden Chlorierungsrückstände unter Rühren und Kühlen in flüssige, teerartige Chlorkohlenwasserstoffgemische mit einer Viskosität von $\leq 0.03$ Pa $\cdot$ s (30 centipoise) und/oder in Kohlenwasserstoffen mit und ohne Aromatenanteil vom Siedebereich 150 bis 300°C bei 1 bar abs., unter Absaugen und Rückführen der dabei anfallenden chlorwasserstoffhaltigen Dämpfe in den Chlorierungsreaktor bei einem Druck von 1,6 bis 2,6 bar abs. in solchen Mengen zueinander eingeleitet werden, daß ein flüssiger Brei als gut pumpbare Zubereitung erhalten wird und die Temperatur der Zubereitung bei Zumischung nicht über 100°C steigt und unter Rühren und Kühlen weiter auf unter 40°C abgesenkt wird.

Die Zumischung wird zweckmäßigerweise bei Atmosphärendruck bzw. leichtem Unterdruck, zwecks Absaugung von intermediär auftretenden Chlorwasserstoffdämpfen in den Chlorierungsreaktor, durchgeführt. Bei den erfindungsgemäß aufzubereitenden Rückständen handelt es sich um an sich unerwünschte Nebenprodukte, die bei Chlorierungsprozessen, insbesondere bei Hochtemperaturchlorierungen anfallen. Es sind dies Gemische, die zumindest zu 95 Gew.%, zumeist jedoch praktisch zu 100 Gew.% aus perchlorierten Produkten bestehen. Die wesentlichen Bestandteile sind Hexachlorbenzol, Hexachlorbutadien und Hexachlorethan. Ferner können auch noch in geringem Maße die an sich im Chlorierungsprozeß erwünschten Chlorkohlenwasserstoffe im Gemisch anwesend sein. Beispielsweise besteht ein bei Raumtemperatur fester Chorierungsrückstand aus einer Anlage zur Herstellung von Perchlorethylen aus etwa 3,3 Mol% Perchlorethylen, 5,4 Mol% Hexachlorethan, 25 Mol% Hexachlorbutadien und 66,3 Mol% Hexachlorbenzol. Entsprechend weisen diese festen Chlorierungsrückstände eine chemische Zusammensetzung auf, die sich in guter Näherung durch die Summenformel

$$C_{5-6}Cl_{5,8-6,0}$$

darstellen läßt. Ein Wasserstoffanteil, der bei der erfindungsgemäßen Zubereitung in Rechnung zu stellen wäre, fehlt praktisch vollständig.

Die erfindungsgemäß zur Aufbereitung der Chlorierungsrückstände eingesetzten teerartigen Chlorkohlenwasserstoffe fallen bei der Pyrolyse von 1,2-Dichlorethan bzw. bei der Aufbereitung der Pyrolyseprodukte sowie von rohem 1,2-Dichlorethan aus der Direkt- und/oder Oxichlorierung von Ethylen an. Es handelt sich dabei um teerartige Gemische, d.h. Chlorkohlenwasserstoffe mit den Summenformeln

$$I \; C_{3,0-3,5}H_{4,0-5,5}Cl_{2,6-3,6}O_{0,01-0,02}$$

und

$$II \; C_{2,0-2,5}H_{3,0-3,5}Cl_{2,4-3,0}O_{0,01-0,015}$$

die bei Temperaturen von 140°C und höher keinen merklichen Dampfdruck mehr haben.

Die teerartigen Zusammensetzungen der Formel I fallen in der ersten Aufbereitungsstufe der Pyrolyse an, in denen die Pyrolyseprodukte nach Verlassen des Pyrolyseofens abgeschreckt werden. Die kohlenstoffärmeren Zusammensetzungen der Formel II werden als Destillationsrückstände in jener Aufbereitungsstufe erhalten, in der nach Abtrennung der Leichtsieder und des erwünschten monomeren Vinylchlorids, das bei der Pyrolyse nicht umgesetzte 1,2-Dichlorethan zusammen mit rohem 1,2-Dichlorethan aus der Direkt- und/oder Oxichlorierung von Ethylen reingewonnen wird.

Die genannten teerartigen Gemische enthalten oftmals noch Feststoffe wie Koks und Metallchloride, die jedoch bei dem erfindungsgemäßen Verfahren zur Aufbereitung von festen Chlorierungsrückständen nicht stören. Wichtig jedoch ist, daß diese teerartigen Chlorkohlenwasserstoffe eine Viskosität aufweisen, die $\leq 0.03$ Pa $\cdot$ s (30 centipoise) beträgt. Überraschenderweise sind nämlich die erfindungsgemäßen Zubereitungen, die als flüssiger Brei vorliegen, bis zu Außentemperaturen von −30°C gut fließfähig und pumpbar, sofern die Viskosität des Anteils an Teerverbindungen an der Mischung bei Werten ≦ 0.03 Pa·s (30 centipoise) liegt.

Beispiele für die alternativ einzusetzenden Kohlenwasserstoffe vom Siedebereich 150 bis 380°C bei 1 bar abs. sind Kerosin sowie schwere und leichte Heizöle mit mehr oder weniger Aromatenanteil, d.h. also Verbindungen mit einem Kohlenstoff/Wasserstoff-Atomverhältnis von 1 : 1,0 bis 2,0.

Die vorstehend genannten Aufbereitungsmittel können einzeln oder im Gemisch eingesetzt werden. Da es sich bei den teerartigen Aufbereitungsmitteln um an sich unerwünschte Nebenprodukte der Vinylchloridherstellung handelt, die ohnehin am besten durch Verbrennung entsorgt werden, ist es bevorzugt, diese teerartigen Gemische als Aufbereitungsmittel einzusetzen. Dabei ist es innerhalb dieser vorzugsweisen Ausführungsform des Verfahrens möglich, z.B. zum Ausgleich der Kohlenstoff/Wasserstoff/Chlor-Bilanz der Zubereitung geringere Mengen an Kohlenwasserstoffen vom Siedebereich 150 bis 380°C (bei 1 bar abs.) mitzuverwenden.

Die Zumischung der Chlorierungsrückstände zu den erfindungsgemäßen Dispergiermitteln, den teerartigen Chlorkohlenwasserstoffen, erfolgt in bekannter Weise, beispielsweise in Druckbehältern, die mit Rührwerken versehen sind. Zur Kühlung der Mischungen sind diese Druckbehälter mit Kühlmantel oder Kühlschlange, vorzugsweise mit Kühlmantel ausgerüstet. Die Zugabe der 240 bis 280°C heiden Schmelze der Chlorierungsrückstände erfolgt so, daß die Mischungstemperatur 100°C nicht überschreitet. Vorzugsweise beträgt die Temperatur der Zubereitung während des Zumischens der Chlorierungsrückstände und des anschließenden Rührvorgangs von 30 bis 80°C. Die Reihenfolge der Zugabe der Komponenten zur Mischung ist beliebig. Während der Zumischung werden dabei durch Crackvorgänge anfallende chlorwasserstoffhaltige Dämpfe anbgesaugt und dem Chlorierungsreaktor bei 1,6 bis 2.6 bar abs. zur Perchlorierung zugeführt. Die Zugabe erfolgt so, daß ein flüssiger Brei als Zubereitung erhalten wird, die ihrerseits ein Gewichtsverhältnis von Wasserstoff: Chlor bis 0,04 : 1 aufweist. Der Anteil an Chlorierungsrückständen in der Mischung beträgt vorzugsweise 30 bis 50 Gew.%, bezogen auf das Gesamtgewicht der Mischung.

Die Zwischenlagerung der Mischung vor der Verbrennung kann unter ständigem Rühren und Kühlen innerhalb eines Temperaturbereichs von −5°C bis +30°C in einem weiteren Rührwerksbehälter erfolgen. Vorzugsweise wird die Mischung zwischen den beiden Rührwerksbehälter über eine Ringleitung im Kreis gepumpt. Über eine Stichleitung kann das Gemisch mit den Chlorierungsrückständen schließlich kontinuierlich bzw. diskontinuierlich einer Verbrennungsanlage aufgegeben werden.

Ein geeignetes Verbrennungsverfahren ist beispielsweise in der DE-OS 2827761 beschrieben. Nach dem erfindungsgemäßen Verfahren gelingt es, Chlorierungsrückstände, insbesondere solche, die bei Hochtemperaturchlorierungsverfahren anfallen, so aufzubereiten, daß sie umweltfreundlich verbrannt werden können. Dies setzt lediglich voraus, daß die zu verbrennende Zubereitung jederzeit exakt dosierbar ist, um in Abhängigkeit vom erforderlichen Sauerstoffüberschuß eine möglichst quantitative und rußfreie Verbrennung zu gewährleisten.

Mit dem erfindungsgemäßen Verfahren kann der in den Rückständen vorhandene Chloranteil zumindest zum größten Teil als wieder verwertbarer trockener Chlorwasserstoff erhalten werden, der beispielsweise einer Oxichlorierung zugeführt werden kann. Das erfindungsgemäße Verfahren ist besonders wertvoll als Entsorgungsverfahren innerhalb der in der chemischen Industrie angewandten Verbundproduktionstechnik, da neben den genannten Chlorierungsrückständen gleichzeitig auch die bei der Herstellung von Vinylchlorid anfallenden Teere in einem Arbeitsgang entsorgt werden können.

Die Erfindung wird nun anhand von Beispielen und Vergleichsbeispielen näher erläutert.

Beispiel

In einem 6 m³ fassenden Rührwerksbehälter, der mit einem Doppelmantel versehen ist, in dem 18 grädiges Kühlwasser zirkuliert, werden 3600 kg eines flüssigen VCM-Teers mit der Viskosität 0.0075 Pa · s (7,5 centipoise) und folgender Zusammensetzung vorgelegt :

|        |        |            |
|--------|--------|------------|
| 28,58 Gew.% | | Kohlenstoff |
| 3,67  | "      | Wasserstoff |
| 67,64 | "      | Chlor |
| 0,11  | "      | Sauerstoff |

In diese Vorlage werden aus dem Rückstandskonzentrator eines Hochtemperaturchlorierungsprozesses zur Herstellung von Perchlorethylen aus Propylen bzw. teilchlorierten $C_2$- bzw. $C_3$-Chlorkohlenwasserstoffen und Chlor, in dem sich stündlich 250 kg Rückstände folgender Zusammensetzung ansammeln :

| | | |
|---|---|---|
| 2,0 | Gew.% | Perchlorethylen |
| 4,7 | " | Hexachlorethan |
| 23,9 | " | Hexachlorbutadien |
| 69,4 | " | Hexachlorbenzol |

— nach 8 Stunden unter Rühren und Kühlen auf 30°C 2000 kg dieses Rückstandes im schmelzförmigen Zustand bei 270°C und 2,6 bar abs. Druck eingeleitet. Die durch Kontakt zwischen der Flüssigkeit und der Schmelze auftretenden Chlorwasserstoff-haltigen Dämpfe werden abgesaugt und in den Chlorierungsreaktor zur Herstellung von Perchlorethylen zurückgeführt. Die Temperatur der Mischung beträgt 30°C. Der dabei anfallende flüssige Brei hat ein Gewichtsverhältnis von Wasserstoff : Chlor von 0,0328 : 1, wobei in dieser Zubereitung der Anteil an dem Chlorierungsrückstand 35,7 Gew.% beträgt. Zur Zwischenlagerung wird die breige Flüssigkeit unter ständigem Rühren und Kühlen in einen danebenstehenden 20 m³ fassenden Rührwerksbehälter, der ebenfalls mit einem wassergekühlten Doppelmantel versehen ist, gepumpt, dort unter Rühren und Kühlen auf ca.30°C über eine nichtbegleitbeheizte und nicht isolierte Ringleitung zurück in den Rührwerksbehälter im Kreis gepumpt bzw. von der Ringleitung aus in einer Stichleitung in geeigneten Portionen gut dosierbar einer Verbrennungsanlage aufgegeben. Selbst bei Außentemperaturen bis zu −30°C und Standzeiten bis zu 24 Stunden sind keinerlei Apparate- bzw. Leitungsverlegungen zu verzeichnen.

Vergleichsbeispiel A

Verfährt man gemäß dem Beispiel, verwendet jedoch einen VCM-Teer gleicher Zusammensetzung mit einer Viskosität von 0.035 Pa · s (35 centipoise) bzw. einen bei 6,7 mbar und 100°C verbleibenden unverdampfbaren Rückstand von 48 Gew.%, so ergeben sich bei der Zwischenlagerung und auch bei der Dosierung in die Verbrennungsvorrichtung im Verlaufe von wenigen Stunden schon Verstopfungsprobleme, die bei Temperaturen von bereits 0°C noch stärker in Erscheinung treten und eine geregelte Verbrennung der Zubereitung nicht mehr ermöglichen.

Vergleichsbeispiel B

Man verfährt gemäß dem Beispiel jedoch ohne Kühllen des Ansatzbehälters bzw. des Zwischenlagerbehälters (T = über 100°C).Schon während des Zusammenfließens beider Rückstände treten trotz gleichen intensiven Rührens Feststoffablagerungen auf, die im Laufe der Zeit dazu führen, daß die Zubereitung nicht mehr pumpbar ist und daß alle Leitungen und Stutzen verstopfen.

## Patentansprüche

1. Verfahren zur Aufbereitung von Chlorierungsrückständen, dadurch gekennzeichnet, daß die in Schmelze bei Temperaturen von 240 bis 280°C anfallenden Chlorierungsrückstände unter Rühren und Kühlen in flüssige, teerartige Chlorkohlenwasserstoffgemische mit einer Viskosität von ≦ 0.03 Pa · s (30 centipoise) und/oder in Kohlenwasserstoffe mit und ohne Aromatenanteil vom Siedebereich 150°C bis 300°C bei 1 bar abs., unter Absaugen und Rückführung der dabei anfallenden chlorwasserstoffhaltigen Dämpfe in den Chlorierungsreaktor bei einem Druck von 1,6 bis 2.6 bar abs., in solchen Mengen zueinander eingeleitet werden, daß ein flüssiger Brei als gut pumpbare Zubereitung erhalten wird, und die Temperatur der Zubereitung bei Zumischen nicht über 100°C steigt und unter Rühren und Kühlen weiter auf unter 40°C abgesenkt wird.

2. Verfahren nach Anspruch 1, dadurch gekennzeichnet, daß der Anteil an Chlorierungsrückständen in der Zubereitung 30 bis 50 Gew.% beträgt.

3. Verfahren nach Anspruch 1 und 2, dadurch gekennzeichnet, daß das Gewichtsverhältnis von Wasserstoff : Chlor in der Zubereitung bis 0,04 : 1 beträgt.

## Claims

1. Process for the working up of chlorination residues, characterised in that the chlorination residues obtained in the melt are introduced at temperatures of 240 to 280°C, with stirring and cooling into liquid, tarry chlorohydrocarbon mixtures having a viscosity of 0.03 Pa · s (30 centipoise) and/or into hydrocarbons with and without aromatic content of boiling range 150 to 300°C at 1 bar abs., while aspirating and leading back the hydrogen chloride-containing steam obtained in this way into the chlorination reactor at a pressure of 1.6 to 2.6 bar abs., in amounts in relation to one another such that a liquid paste is obtained as an easily pumpable preparation and the temperature of the preparation on admixture does not rise above 100°C and is further reduced to below 40°C with stirring and cooling.

2. Process according to Claim 1, characterised in that the content of chlorination residues in the preparation is 30 to 50% by weight.

3. Process according to Claims 1 and 2, characterised in that the weight ratio of hydrogen : chlorine in the preparation is up to 0.04 : 1.

## Revendications

1. Procédé de traitement de résidus de chloration, procédé caractérisé en ce que l'on introduit ces résidus, qui se forment à l'état fondu à des températures de 240 à 280°C, tout en agitant et en refroidissant, dans des mélanges d'hydrocarbures chlorés goudronneux liquides ayant une viscosité inférieure ou égale à 0,03 Pa · s et/ou dans des hydrocarbures avec ou sans fraction aromatique d'un intervalle d'ébullition de 150 à 300°C à la pression absolue de 1 bar, avec aspiration et retour au réacteur de chloration des vapeurs formées contenant du chlorure d'hydrogène à une pression absolue de 1,6 à 2,6 bar, ceci dans des proportions mutuelles telles qu'il se forme une bouillie liquide comme préparation facile à pomper et que la température de cette préparation ne dépasse pas 100°C au cours du mélange, température que l'on abaisse ensuite au-dessous de 40°C en refroidissant et en agitant.

2. Procédé selon la revendication 1, caractérisé en ce que la partie des résidus de chloration de la préparation est de 30 à 50% en poids.

3. Procédé selon les revendications 1 et 2, caractérisé en ce que dans la préparation le rapport pondéral hydrogène : chlore atteint jusqu'à 0,04.